# EUROPÄISCHE PATENTSCHRIFT

(11) **EP 2 734 144 B1**
(45) Veröffentlichungstag und Bekanntmachung des Hinweises auf die Patenterteilung: **03.10.2018**
(21) Anmeldenummer: 12728564.1
(22) Anmeldetag: 20.06.2012
(51) Int. Cl.: A61C 5/60, A61C 5/62, A61C 19/06

(54) **AUFTRAGEVORRICHTUNG FÜR DENTALMASSEN**
APPLICATION DEVICE FOR DENTAL COMPOSITIONS
DISPOSITIF D'APPLICATION DE PÂTES DENTAIRES

(30) Priorität: 22.07.2011 DE 102011079682
(43) Veröffentlichungstag der Anmeldung: 28.05.2014
(73) Patentinhaber: Transcodent GmbH & Co. KG, 24149 Kiel (DE)
(72) Erfinder: ROLLE, Philipp, 24536 Neumünster (DE); SOBINA, Frederic, 24147 Kiel (DE)
(74) Vertreter: Manitz Finsterwald Patentanwälte PartmbB
(86) Internationale Anmeldenummer: PCT/EP2012/061788
(87) Internationale Veröffentlichungsnummer: WO 2013/013898

(56) Entgegenhaltungen:
- EP-A1- 0 244 864
- US-A- 4 329 990

## Beschreibung

Die Erfindung betrifft eine Auftragevorrichtung für Dentalmassen. An einem hinteren Ende der Auftragevorrichtung ist ein Anschluss für einen Abgabebehälter ausgebildet. Ein Kanal erstreckt sich von dem Anschluss bis zu einer am vorderen Ende der Auftragevorrichtung angeordneten Kanalöffnung.

Solche Auftragevorrichtungen können dazu verwendet werden, die in einem Abgabebehälter enthaltene Dentalmasse gezielt auszubringen. Die Auftragevorrichtung wird dazu über den Anschluss mit dem Abgabebehälter verbunden, so dass der Kanal der Auftragevorrichtung mit einer Austrittsöffnung des Abgabebehälters verbunden ist. Aus dem Abgabebehälter ausgebrachte Dentalmasse bewegt sich durch den Kanal und tritt am vorderen Ende der Auftragevorrichtung aus.

Bekannt sind Auftragevorrichtungen, bei denen das vordere Ende mit Fasern versehen ist. Die Fasern können dazu verwendet werden, die ausgebrachte Dentalmasse auf einer Fläche zu verteilen oder die Dentalmasse in eine bestimmte Form zu bringen. Solche Fasern haben den Nachteil, dass es kaum möglich ist, die Dosierung der zu verteilenden Dentalmasse zu beeinflussen.

In US 4,329,990 ist ein vaginales Reinigungsinstrument beschrieben, das an seinem distalen Ende einen Körper aus einem weichen, porösen und absorbierenden Material aufweist. Die EP 0 244 863 offenbart einen Applikator für Wimperntusche, bei dem durch Betätigung eines Hubmechanismus eine vorgegebene Menge an Wimperntusche auf eine Außenfläche des Applikators aufgebracht werden kann.

Der Erfindung liegt die Aufgabe zu Grunde, eine Auftragevorrichtung vorzustellen, die mehr Flexibilität beim Auftragen der Dentalmasse bietet. Ausgehend vom eingangs genannten Stand der Technik wird die Aufgabe gelöst mit den Merkmalen des Anspruchs 1. Erfindungsgemäß sind am vorderen Ende der Auftragevorrichtung flächige Vorsprünge ausgebildet, die einen Aufnahmeraum für die Dentalmasse zwischen sich einschließen. Die flächigen Vorsprünge sind elastisch ausgebildet. Die Kanalöffnung ist an einer vorderen Stirnfläche der Auftragevorrichtung angeordnet. Vorteilhafte Ausführungsformen finden sich in den Unteransprüchen.

Zunächst werden einige Begriffe erläutert. Ein Aufnahmeraum im Sinne der Erfindung ist zu zwei Seiten hin durch Flächen der Vorsprünge begrenzt. Zwischen den Vorsprüngen gibt es offene Bereiche, in denen der Aufnahmeraum ohne weitere Abgrenzung in die Umgebung übergeht. Die Vorsprünge sind vorzugsweise im Wesentlichen parallel zueinander angeordnet.

Das vordere Ende umfasst die vordere Stirnseite und den daran angrenzenden Abschnitt der Auftragevorrichtung. Der Begriff Dentalmasse umfasst pastöse und flüssige Substanzen.

Die erfindungsgemäße Auftragevorrichtung hat den Vorteil, dass die flächigen Vorsprünge dazu genutzt werden können, um die Dentalmasse gezielt auszubringen und zu verteilen. Außerdem wird es auch möglich, überschüssig ausgebrachte Dentalmasse in den Aufnahmeraum zu nehmen. Dadurch erhöht sich die Bedienungsfreundlichkeit und es wird möglich, die Auftragevorrichtung flexibel einzusetzen.

Von Vorteil ist es, wenn die Dentalmasse in dem Aufnahmeraum mehrfach aufgenommen und wieder abgegeben werden kann. Zu diesem Zweck können die Vorsprünge elastisch ausgebildet sein, so dass das Volumen des Aufnahmeraums durch Druck auf die Vorsprünge verändert werden kann. Entsprechend der Volumenverminderung tritt Dentalmasse über die offenen Bereiche des Aufnahmeraums wieder aus. Dies kann beispielsweise genutzt werden, wenn anfänglich an einer Stelle zu viel und an einer anderen Stelle zu wenig Dentalmasse ausgebracht wurde.

Damit die Auftragevorrichtung in dieser Weise gehandhabt werden kann, ist es erforderlich, dass eine gewisse Kraft auf das vordere Ende der Auftragevorrichtung übertragen werden kann. Es kann dazu eine Tragestruktur vorgesehen sein, die sich vom hinteren Ende bis zum vorderen Ende erstreckt. Die Tragestruktur hat vorzugsweise eine höhere Steifigkeit als die Vorsprünge, so dass die Vorsprünge durch eine über die Tragestruktur übertragene Kraft verformt werden können.

Die Tragestruktur kann so ausgebildet sein, dass sie den Kanal umgibt, dass der Kanal sich also im Inneren der Tragestruktur erstreckt. Die Tragestruktur kann aus Metall bestehen und beispielsweise die Form einer Kanüle haben. Die flächigen Vorsprünge können aus Kunststoff bestehen und an das Metall angeformt sein. Alternativ kann die Auftragevor richtung insgesamt aus Kunststoff bestehen. Die Auftragevorrichtung kann als Spritzgussteil hergestellt sein, wobei die Tragestruktur aus einem steiferen Kunststoffmaterial bestehen kann als die flächigen Vorsprünge.

Wenn die Tragestruktur aus Metall besteht, kann es ausreichen, wenn das Kunststoffmaterial der flächigen Vorsprünge nur mit dem vorderen Ende der Tragestruktur verbunden ist. Damit beim Ausdrücken der Dentalmasse durch den Kanal große Kräfte auf die Verbindung zwischen dem Kunststoff und dem Metall vermieden werden, kann vorgesehen sein, dass die Kanalöffnung in der metallenen Tragestruktur angeordnet ist. Die Kanalöffnung kann bezogen auf die Längsrichtung des Kanals seitlich ausgerichtet sein. Die Dentalmasse tritt dann ohne vorherigen Kontakt zu den flächigen Vorsprüngen durch die Kanalöffnung aus. Die flächigen Vorsprünge werden zum anschließenden Verteilen der Dentalmasse verwendet. Möglich ist es auch, dass der Kanal von der metallenen Tragestruktur in das Kunststoffmaterial übergeht und dass die Kanalöffnung von dem Kunststoffmaterial gebildet wird.

Gemäß der Erfindung ist die Kanalöffnung an einer vorderen Stirnfläche der Auftragevorrichtung angeordnet. Die flächigen Vorsprünge können sich in radialer Richtung erstrecken, bezogen auf eine sich vom hinteren Ende zum vorderen Ende erstreckende Längsachse der Auftragevorrichtung. Bei dieser Ausführungsform tritt die Dentalmasse ebenfalls ohne vorherigen Kontakt zu den flächigen Vorsprüngen aus der Auftragevorrichtung aus. Die Kanalöffnung mündet also außerhalb des Aufnahmeraums.

Es kann auch vorgesehen sein, dass die Kanalöffnung in einem Aufnahmeraum mündet. Die aus der Kanalöffnung austretende Dentalmasse füllt dann zunächst den Aufnahmeraum aus. Aus dem Aufnahmeraum heraus kann die Dentalmasse dann in der gewünschten Weise verteilt werden. Wenn die Vorsprünge sich in radialer Richtung erstrecken, ist die Kanalöffnung bezogen auf die Längsrichtung des Kanals vorzugsweise seitlich angeordnet. Die Kanalöffnung kann rechtwinklig zu der Längsrichtung des Kanals ausgerichtet sein. Möglich ist es auch, dass die Kanalöffnung einen kleineren Winkel mit der Längsrichtung des Kanals einschließt.

Umfasst sind auch Ausführungsformen, bei denen der Aufnahmeraum in Verlängerung der Auftragevorrichtung angeordnet ist. Die flächigen Vorsprünge können sich dazu vom vorderen Ende der Tragestruktur nach vorne erstrecken. Eine an der Stirnfläche der Tragestruktur angeordnete Kanalöffnung mündet in diesem Fall in dem Aufnahmeraum.

Im einfachsten Fall erstrecken sich zwei flächige Vorsprünge vom vorderen Ende der Tragestruktur nach vorne, wobei die beiden Vorsprünge im Wesentlichen parallel zueinander ausgerichtet sind. Möglich ist auch eine fächerartige Anordnung mit einer Mehrzahl von nebeneinander angeordneten Aufnahmeräumen. Auch andere Gestaltungen, bei denen etwa die flächigen Vorsprünge zusammen eine tulpenartige Form bilden oder bei denen die flächigen Vorsprünge einander kreuzen sind möglich.

Es kann sein, dass die erfindungsgemäße Auftragevorrichtung lediglich eine Kanalöffnung umfasst. Die Kanalöffnung kann entweder innerhalb des Aufnahmeraums oder außerhalb des Aufnahmeraums (bzw. der Aufnahmeräume, falls mehrere vorgesehen sind) münden. Alternativ kann die Auftragevorrichtung mit einer Mehrzahl von Kanalöffnungen ausgestattet sein. Die Kanalöffnungen können so angeordnet sein, dass in einer Mehrzahl von Aufnahmeräumen Kanalöffnungen münden. Möglich ist es auch, dass ein Teil der Kanalöffnungen in einen Aufnahmeraum mündet und ein anderer Teil der Kanalöffnungen außerhalb der Aufnahmeräume mündet.

Der Transportbehälter, an den die erfindungsgemäße Auftragevorrichtung angeschlossen werden kann, kann mit einer Ausbringspitze versehen sein, die nach vorne hin konisch zuläuft. Die Ausbringspitze kann mit einer Austrittsöffnung für die Dentalmasse versehen sein. Der Anschluss der erfindungsgemäßen Auftragevorrichtung, über den die Verbindung zu dem Transportbehälter hergestellt wird, kann eine konisch zulaufende Ausnehmung umfassen, die an die Ausbringspitze angepasst ist. Die Auftragevorrichtung kann dann mit dem Anschluss auf die Ausbringspitze aufgesteckt werden und wird dort durch Reibschluss gehalten. Die Dentalmasse kann aus der Austrittsöffnung direkt in den Kanal der Auftragevorrichtung übergehen.

In seiner einfachsten Ausführungsform hat die erfindungsgemäße Auftragevorrichtung lediglich zwei Vorsprünge und einen zwischen den Vorsprüngen angeordneten Aufnahmeraum. Ein größerer Spielraum bei der Aufnahme überschüssiger Dentalmasse kann erreicht werden durch eine Mehrzahl von Aufnahmeräumen. Die Aufnahmeräume können derart nebeneinander angeordnet sein, dass mehr als zwei flächige Vorsprünge im Wesentlichen parallel zueinander ausgerichtet sind, so dass ein mittlerer flächiger Vorsprung zwei benachbarte Aufnahmeräume voneinander trennt. Vorzugsweise ist der Abstand zwischen zwei flächigen Vorsprüngen kleiner als die größte Höhenausdehnung der Vorsprünge. Die Vorsprünge können dann so verformt werden, dass sie einander berühren.

Die Vorsprünge können so gestaltet sein, dass sie sich scheibenförmig um den Kanal herum erstrecken. Dies hat den Vorteil, dass der Zahnarzt nicht darauf achten muss, welche Winkelausrichtung die Auftragevorrichtung hat. Die Vorsprünge können gleiche Abmessungen haben, so dass die Vorsprünge in ihrer Summe eine zylinderförmige Kontur bilden. Möglich ist auch, dass die Vorsprünge in Richtung des vorderen Endes bzw. des hinteren Endes kleiner werden, so dass die von den Vorsprüngen gebildete Kontur sich in dieser Richtung verjüngt.

Die erfindungsgemäße Auftragevorrichtung soll insbesondere dazu dienen, Dentalmassen in zu füllenden Löchern von Zähnen aufzubringen. Dazu liegt der größte Durchmesser der durch die flächigen Vorsprünge aufgespannten Kontur vorzugsweise zwischen 1 mm und 5 mm, weiter vorzugsweise zwischen 2 mm und 3 mm.

Insbesondere wenn die zu verarbeitende Dentalmasse vergleichsweise dünnflüssig ist, ist es erstrebenswert, dass die Dentalmasse in dem Aufnahmeraum guten Halt findet. Zu diesem Zweck können ein erster Aufnahmeraum und ein zweiter Aufnahmeraum derart zueinander versetzt angeordnet sein, dass ein Vorsprung des ersten Aufnahmeraums in der seitlichen Verlängerung des zweiten Aufnahmeraums angeordnet ist und so dazu beiträgt, die Dentalmasse im zweiten Aufnahmeraum sicher zu halten. Auch bei dieser Ausführungsform können die Aufnahmeräume so gestaltet sein, dass sie sich in ihrer Summe rund um den Kanal herum erstrecken, so dass die Winkelausrichtung der Auftragevorrichtung wiederum frei gewählt werden kann.

Betrachtet man die Projektion der Vorsprünge des ersten und des zweiten Aufnahmeraums so können die Vorsprünge des ersten Aufnahmeraums einen seitlichen Abstand zu den Vorsprüngen des zweiten Aufnahmeraums haben. Um eine Verwendung der Auftragevorrichtung unabhängig von der Winkelausrichtung zu ermöglichen, ist es jedoch vorzuziehen, wenn in der Projektion die Vorsprünge des ersten Aufnahmeraums mit den Vorsprüngen des zweiten Aufnahmeraums abschließen.

Um den Halt der Dentalmasse weiter zu verbessern, kann innerhalb eines Aufnahmeraums ein Zwischenvorsprung angeordnet sein, dessen Flächenausdehnung klein ist verglichen mit der Flächenausdehnung benachbarter Vorsprünge. Wenn der Zwischenvorsprung in radialer Richtung weiter vorspringt als benachbarte Vorsprünge, kann er gut dazu genutzt werden, aus den Aufnahmeräumen ausgebrachte Dentalmasse auf einer Fläche zu verteilen.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine erste Ausführungsform einer erfindungsgemäßen Auftragevorrichtung;
- Fig. 2:: eine zweite Ausführungsform einer erfindungsgemäßen Auftragevorrichtung;
- Fig. 3:: eine dritte Ausführungsform einer erfindungsgemäßen Auftragevorrichtung;
- Fig. 4:: eine vergrößerte Darstellung des vorderen Endes einer erfindungsgemäßen Auftragevorrichtung bei einer weiteren Ausführungsform der Erfindung; und
- Fig. 5:: die Ansicht aus Fig. 4, wobei eine Kanalöffnung hervorgehoben ist.

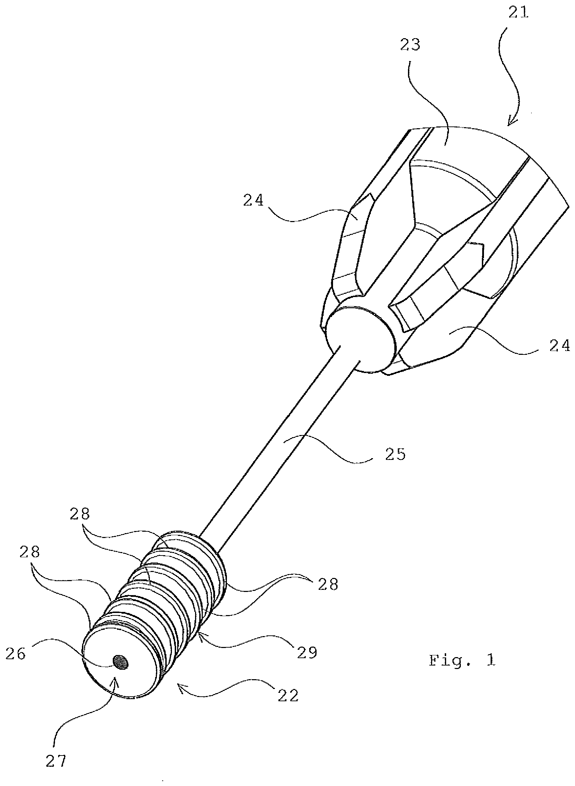

Eine in Fig. 1 gezeigte erfindungsgemäße Auftragevorrichtung erstreckt sich von einem hinteren Ende 21 bis zu einem vorderen Ende 22. Am hinteren Ende 21 ist eine kappenförmige Struktur ausgebildet, die eine in Fig. 1 nicht sichtbare konusförmige Ausnehmung umschließt. Die Ausnehmung dient als Anschluss 23, um die Auftragevorrichtung mit einem nicht gezeigten Abgabebehälter zu verbinden.

Auf ihrer Außenseite ist die kappenförmige Struktur mit einer Mehrzahl von über den Umfang verteilten Vorsprüngen 24 versehen. An den Vorsprüngen kann der Zahnarzt angreifen, um die Auftragevorrichtung auf den Abgabebehälter aufzustecken bzw. von diesem abzuziehen. An die kappenförmige Struktur schließt sich ein Schaft 25 an, der in Richtung des vorderen Endes 22 der Auftragevorrichtung weist.

Im Inneren des Schafts 25 ist ein Kanal 26 ausgebildet, der sich vom hinteren Ende 21 bis zu einer am vorderen Ende 22 mündenden Kanalöffnung 27 erstreckt. Die Kanalöffnung 27 mündet außerhalb der Aufnahmeräume. Am vorderen Ende ist der Schaft 25 mit flächigen Vorsprüngen 28 umgeben, die sich scheibenförmig um den Schaft 25 herum erstrecken. Jeweils zwei flächige Vorsprünge 28 schließen einen Aufnahmeraum 29 zwischen sich ein. Die Aufnahmeräume 29 erstrecken sich ebenfalls rund um den Schaft 25 herum.

Wenn Dentalmasse am hinteren Ende in den Kanal 26 eingebracht wird, kann diese sich durch den Kanal 26 hindurch bis zur Kanalöffnung 27 bewegen und dort austreten. Der Zahnarzt positioniert die Kanalöffnung 27 so, dass die Dentalmasse direkt im Gebiet der Anwendung aufgebracht wird. Der Zahnarzt schätzt ab, welche Menge an Dentalmasse insgesamt benötigt wird, und bringt diese durch die Kanalöffnung 27 aus. Anschließend verwendet der Zahnarzt die Vorsprünge 28, um die Dentalmasse in der gewünschten Weise auf einer Fläche zu verteilen oder die Dentalmasse in der gewünschten Weise zu modellieren. Der Schaft 25 wirkt dabei als Tragestruktur, über den eine für diesen Zweck hinreichende Kraft auf das vordere Ende 22 der Auftragevorrichtung übertragen werden kann.

Stellt sich beim Verteilen bzw. beim Modellieren heraus, dass zu viel Dentalmasse ausgebracht wurde, kann die überschüssige Dentalmasse wieder aufgenommen werden, indem die Vorsprünge 28 in radialer Richtung in die überschüssige Dentalmasse hineingedrückt werden. Die Dentalmasse gelangt dadurch in die Aufnahmeräume 29 und wird dort von den Vorsprüngen 28 gehalten. Es wird nun vorzugsweise ein anderer Bereich der Vorsprünge 28 verwendet, um die verbleibende Dentalmasse zu verteilen bzw. zu modellieren.

Die Vorsprünge 28 sind aus einem elastischen Material gefertigt, so dass es möglich ist, die Aufnahmeräume 29 durch geeigneten Druck auf die Vorsprünge 28 wieder zu verkleinern, um bei Bedarf einen Teil der Dentalmasse wieder aus den Aufnahmeräumen 29 auszubringen.

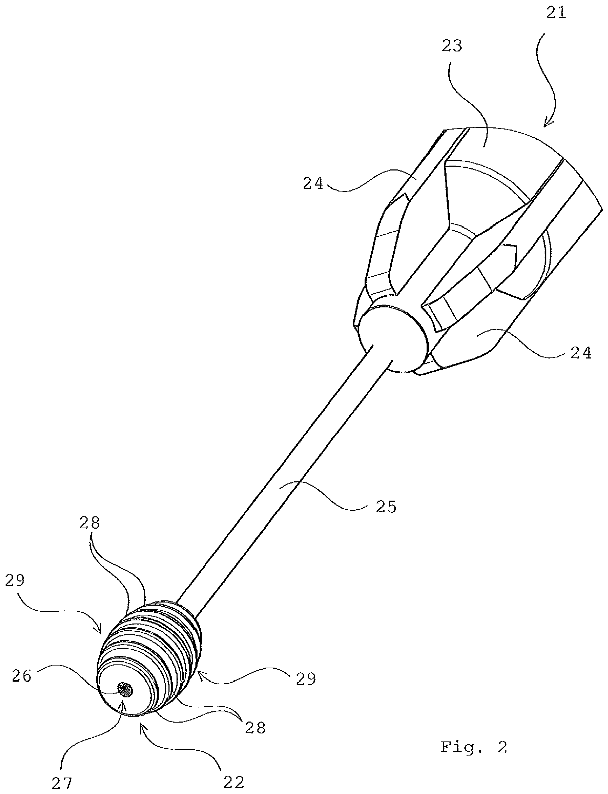

Bei der Ausführungsform der Fig. 1 haben die Vorsprünge 28 übereinstimmende Abmessungen. Durch die hintereinander angeordneten scheibenförmigen Vorsprünge 28 ergibt sich insgesamt eine Kontur in Form eines Zylinders. In Fig. 2 haben die in Richtung des hinteren Endes 21 und des vorderen Endes 22 weisenden Vorsprünge 28 kleinere Durchmesser als die zentralen Vorsprünge 28. Die durch die Vorsprünge 28 aufgespannte Kontur verjüngt sich also in Richtung des hinteren Endes 21 und des vorderen Endes 22. Die Ausführungsform gemäß Fig. 2 kann beispielsweise dazu verwendet werden, die Dentalmasse direkt in Kavitäten von Zähnen aufzubringen.

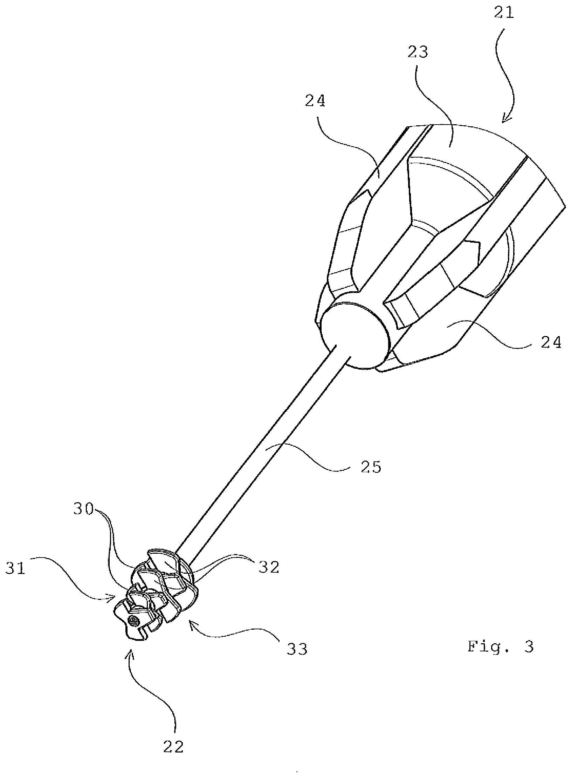

Die Fig. 3 zeigt eine Ausführungsform der Erfindung, bei der die Aufnahmeräume zueinander versetzt angeordnet sind. So sind auf der in Fig. 3 linken Seite zwei Vorsprünge 30 ausgebildet, die einen Aufnahmeraum 31 zwischen sich einschließen. Auf der in Fig. 3 rechten Seite der Auftragevorrichtung sind ebenfalls zwei Vorsprünge 32 ausgebildet, die einen Aufnahmeraum 33 zwischen sich einschließen. Die Aufnahmeräume 31, 33 sind derart zueinander versetzt, dass der Vorsprung 30 des linken Aufnahmeraums 31 in der seitlichen Verlängerung des rechten Aufnahmeraums 33 angeordnet ist. Umgekehrt ist der Vorsprung 32 des rechten Aufnahmeraums 33 in der seitlichen Verlängerung des linken Aufnahmeraums 31 angeordnet. Diese Kombination versetzt zueinander angeordneter Aufnahmeräume wiederholt sich mehrfach. In ihrer Summe erstrecken sich die Aufnahmeräume 31, 33 rund um den Schaft 25 herum. In Projektion betrachtet schließen die Vorsprünge 30 des linken Aufnahmeraums 31 mit den Vorsprüngen 32 des rechten Aufnahmeraums 33 ab.

In den Aufnahmeräumen 31, 33 ist jeweils ein Zwischenvorsprung ausgebildet, dessen Flächenausdehnung kleiner ist als die Flächenausdehnung der Vorsprünge 30, 32. Allerdings springt der Zwischenvorsprung in Radialrichtung weiter vor als die Vorsprünge 30, 32. Bei dieser Ausführungsform sind es am Beispiel des Aufnahmeraums 33 nicht lediglich die den Aufnahmeraum 33 bildenden Vorsprünge 32, durch die die Dentalmasse im Aufnahmeraum 33 gehalten wird. Vielmehr trägt auch der in der seitlichen Verlängerung des Aufnahmeraums 33 liegende Vorsprung 30 dazu bei, die Dentalmasse zu halten. Der Halt der Dentalmasse wird weiter unterstützt durch den im Zentrum des Aufnahmeraums 33 angeordneten Zwischenvorsprung. Es hat sich herausgestellt, dass diese Ausführungsform eine hohe Bedienungsfreundlichkeit bietet.

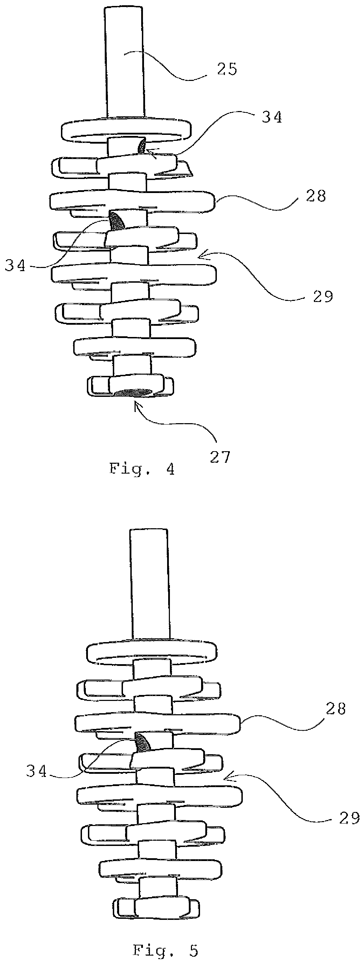

In den Figuren 4 und 5 haben die flächigen Vorsprünge 28 eine ähnliche Gestalt wie in Fig. 3. In Fig. 4 sind außer einer Kanalöffnung 27 an der Stirnfläche der Tragestruktur zwei weitere Kanalöffnungen 34 vorgesehen, die bezogen auf die Längsrichtung des Kanals 26 seitlich münden. Die Kanalöffnungen 27, 34 münden in Aufnahmeräumen 29, so dass aus den Kanalöffnungen 27, 34 austretende Dentalmasse zunächst die Aufnahmeräume 29 ausfüllt. Aus den Aufnahmeräumen 29 heraus kann die Dentalmasse gezielt ausgebracht und verteilt werden. Wurde versehentlich zu viel Dentalmasse ausgebracht, können Aufnahmeräume, in denen keine Kanalöffnung 27, 34 mündet und in denen also keine Dentalmasse enthalten ist, verwendet werden, um die überschüssige Dentalmasse wieder aufzunehmen. In Fig. 5 gibt es lediglich eine einzige seitliche Kanalöffnung 34.

## Patentansprüche

1. Auftragevorrichtung für Dentalmassen mit einem an einem hinteren Ende (21) angeordneten Anschluss (23) für einen Abgabebehälter und einem Kanal (26), der sich von dem Anschluss (23) bis zu einer am vorderen Ende (22) angeordneten Kanalöffnung (27, 34) erstreckt, wobei am vorderen Ende (22) flächige Vorsprünge (28, 30, 32) ausgebildet sind, die einen Aufnahmeraum (29, 31, 33) für die Dentalmasse zwischen sich einschließen, und wobei die flächigen Vorsprünge (28, 29, 32) elastisch ausgebildet sind, **dadurch gekennzeichnet, dass** die Kanalöffnung (27, 34) an einer vorderen Stirnfläche der Auftragevorrichtung angeordnet ist.

2. Auftragevorrichtung nach Anspruch 1, **dadurch gekennzeichnet, dass** eine Tragestruktur (25) vorgesehen ist, die sich zum vorderen Ende (22) erstreckt, und dass die Tragestruktur (25) eine höhere Steifigkeit hat als die flächigen Vorsprünge (28, 30, 32).

3. Auftragevorrichtung nach Anspruch 2, **dadurch gekennzeichnet, dass** die Auftragevorrichtung als Spritzgussteil aus einem Kunststoffmaterial hergestellt ist und dass das Kunststoffmaterial der Tragestruktur (25) eine höhere Steifigkeit hat als das Kunststoffmaterial der flächigen Vorsprünge (28, 30, 32).

4. Auftragevorrichtung nach einem der Ansprüche 1 bis 3, **dadurch gekennzeichnet, dass** eine Mehrzahl von Kanalöffnungen (27, 34) vorgesehen ist.

5. Auftragevorrichtung nach einem der Ansprüche 1 bis 4, **dadurch gekennzeichnet, dass** die Kanalöffnung (27, 34) in einem Aufnahmeraum (29, 31, 33) mündet.

6. Auftragevorrichtung nach einem der Ansprüche 1 bis 5, **dadurch gekennzeichnet, dass** die Kanalöffnung (27, 34) außerhalb eines Aufnahmeraums (29, 31, 33) mündet.

7. Auftragevorrichtung nach Anspruch 4, **dadurch gekennzeichnet, dass** die Kanalöffnung (27, 34) seitlich bezogen auf die Richtung des Kanals (26) mündet.

8. Auftragevorrichtung nach einem der Ansprüche 1 bis 7, **dadurch gekennzeichnet, dass** die flächigen Vorsprünge (28, 30, 32) sich in radialer Richtung erstrecken.

9. Auftragevorrichtung nach einem der Ansprüche 1 bis 8, **dadurch gekennzeichnet, dass** die flächigen Vorsprünge (28, 30, 32) sich von einem vorderen Ende einer Tragestruktur nach vorne erstrecken.

10. Auftragevorrichtung nach einem der Ansprüche 1 bis 9, **dadurch gekennzeichnet, dass** der Anschluss (23) eine konisch zulaufende Ausnehmung umfasst.

11. Auftragevorrichtung nach einem der Ansprüche 1 bis 10, **dadurch gekennzeichnet, dass** mehr als zwei flächige Vorsprünge (28, 30, 32) vorgesehen sind, die eine Mehrzahl von Aufnahmeräumen (29, 31, 33) zwischen sich einschließen.

12. Auftragevorrichtung nach einem der Ansprüche 1 bis 11, **dadurch gekennzeichnet, dass** die Vorsprünge (28) sich scheibenförmig um den Kanal herum erstrecken.

13. Auftragevorrichtung nach einem der Ansprüche 1 bis 12, **dadurch gekennzeichnet, dass** ein erster Aufnahmeraum (31) und ein zweiter Aufnahmeraum (33) derart zueinander versetzt angeordnet sind, dass ein Vorsprung (30) des ersten Aufnahmeraums (31) in der seitlichen Verlängerung des zweiten Aufnahmeraums (33) angeordnet ist.

## Claims

1. An application apparatus for dental compounds comprising a connector (23) for a dispensing container arranged at a rear end (21); and a passage (26) which extends from the connector (23) up to a passage opening (27, 34) arranged at a front end (22), wherein areal projections (28, 30, 32) which include a reception space (29, 31, 33) for the dental compound between them are formed at the front end (22), and wherein
the areal projections (28, 30, 32) are formed as elastic, **characterized in that** the passage opening (27, 34) is arranged at a front end face of the application apparatus.

2. An application apparatus in accordance with claim 1,
**characterized in that** a support structure (25) is provided which extends to the front end (22); and **in that** the support structure (25) has a higher stiffness than the areal projections (28, 30, 32).

3. An application apparatus in accordance with claim 2,
**characterized in that** the application apparatus is manufactured as an injection-molded part from a plastic material; and **in that** the plastic material of the support structure (25) has a higher stiffness than the plastic material of the areal projections (28, 30, 32).

4. An application apparatus in accordance with any one of the claims 1 to 3,
**characterized in that** a plurality of passage openings (27, 34) are provided.

5. An application apparatus in accordance with any one of the claims 1 to 4,
**characterized in that** the passage opening (27, 34) opens into a reception space (29, 31, 33).

6. An application apparatus in accordance with any one of the claims 1 to 5,
**characterized in that** the passage opening (27, 34) opens outside a reception space (29, 31, 33).

7. An application apparatus in accordance with claim 4, **characterized in that** the passage opening (27, 34) opens laterally with respect to the direction of the passage (26).

8. An application apparatus in accordance with any one of the claims 1 to 7,
**characterized in that** the areal projections (28, 30, 32) extend in a radial direction.

9. An application apparatus in accordance with any one of the claims 1 to 8,
**characterized in that** the areal projections (28, 30, 32) extend forward from a front end of a support structure.

10. An application apparatus in accordance with any one of the claims 1 to 9,
**characterized in that** the connector (23) comprises a conically converging recess.

11. An application apparatus in accordance with any one of the claims 1 to 10,
**characterized in that** more than two areal projections (28, 30, 32) are provided which include a plurality of reception spaces (29, 31, 33) between them.

12. An application apparatus in accordance with any one of the claims 1 to 11,
**characterized in that** the projections (28) extend in disk shape around the passage.

13. An application apparatus in accordance with any one of the claims 1 to 12,
**characterized in that** a first reception space (31) and a second reception space (33) are arranged offset from one another such that a projection (30) of the first reception space (31) is arranged in a lateral extension of the second reception space (33).

## Revendications

1. Dispositif d'application de pâtes dentaires, comportant un raccord (23) agencé à une extrémité arrière (21) et destiné à un récipient distributeur, et un canal (26) qui s'étend depuis le raccord (23) jusqu'à une ouverture de canal (27, 34) disposée à l'extrémité avant (22),
dans lequel
des saillies surfaciques (28, 30, 32) sont réalisées à l'extrémité avant (22), qui enferment entre elles un espace de réception (29, 31, 33) pour la pâte dentaire, et
les saillies surfaciques (28, 29, 32) sont réalisées élastiques, **caractérisé en ce que**
l'ouverture de canal (27, 34) est disposée sur une surface frontale avant du dispositif d'application.

2. Dispositif d'application selon la revendication 1,
**caractérisé en ce que**
il est prévu une structure porteuse (25) qui s'étend vers l'extrémité avant (22), et **en ce que**
la structure porteuse (25) présente une rigidité supérieure à celle des saillies surfaciques (28, 30, 32).

3. Dispositif d'application selon la revendication 2,
**caractérisé en ce que**
le dispositif d'application est réalisé en tant que pièce coulée par injection en une matière plastique, et **en ce que**
la matière plastique de la structure porteuse (25) présente une rigidité supérieure à celle de la matière plastique des saillies surfaciques (28, 30, 32).

4. Dispositif d'application selon l'une des revendications 1 à 3,
**caractérisé en ce que**
il est prévu une pluralité d'ouvertures de canal (27, 34).

5. Dispositif d'application selon l'une des revendications 1 à 4,
**caractérisé en ce que**
l'ouverture de canal (27, 34) débouche à l'intérieur d'un espace de réception (29, 31, 33).

6. Dispositif d'application selon l'une des revendications 1 à 5,
**caractérisé en ce que**
l'ouverture de canal (27, 34) débouche à l'extérieur d'un espace de réception (29, 31, 33).

7. Dispositif d'application selon la revendication 4,
**caractérisé en ce que**
l'ouverture de canal (27, 34) débouche latéralement par rapport à la direction du canal (26).

8. Dispositif d'application selon l'une des revendications 1 à 7,
**caractérisé en ce que**
les saillies surfaciques (28, 30, 32) s'étendent en direction radiale.

9. Dispositif d'application selon l'une des revendications 1 à 8,
**caractérisé en ce que**
les saillies surfaciques (28, 30, 32) s'étendent depuis une extrémité avant d'une structure porteuse vers l'avant.

10. Dispositif d'application selon l'une des revendications 1 à 9,
**caractérisé en ce que**
le raccord (23) comprend un évidement convergeant de façon conique.

11. Dispositif d'application selon l'une des revendications 1 à 10,
**caractérisé en ce que**
il est prévu plus de deux saillies surfaciques (28, 30, 32) qui enferment entre elles une pluralité d'espaces de réception (29, 31, 33).

12. Dispositif d'application selon l'une des revendications 1 à 11,
**caractérisé en ce que**
les saillies (28) s'étendent en forme de rondelle autour du canal.

13. Dispositif d'application selon l'une des revendications 1 à 12,
**caractérisé en ce que**
un premier espace de réception (31) et un second espace de réception (33) sont agencés en décalage l'un par rapport à l'autre de telle sorte qu'une saillie (30) du premier espace de réception (31) est agencé dans le prolongement latéral du second espace de réception (33).
